# EUROPÄISCHE PATENTSCHRIFT

(11) **EP 2 128 051 B1**
(45) Veröffentlichungstag und Bekanntmachung des Hinweises auf die Patenterteilung: **01.12.2010**
(21) Anmeldenummer: 09161172.3
(22) Anmeldetag: 26.05.2009
(51) Int. Cl.: B65G 19/02

(54) **Hängeförderanlage**
Overhead transport assembly
Installation de transport suspendue

(30) Priorität: 27.05.2008 DE 202008007095 U
(43) Veröffentlichungstag der Anmeldung: 02.12.2009
(73) Patentinhaber: psb intralogistics GmbH, 66955 Pirmasens (DE)
(72) Erfinder: Neuber, Wolfgang, 66504, Bottenbach (DE); Dietz, Lothar, 66999, Hinterweidenthal (DE); Marhofer, Kai, 66894, Martinshöhe (DE)
(74) Vertreter: Viering, Hans-Martin

(56) Entgegenhaltungen:
- DE-A1- 19 538 985
- DE-U1- 20 311 926

## Beschreibung

Die Erfindung betrifft eine Hängeförderanlage zum hängenden Fördern, z.B. umlaufenden Hängefördern, von Waren, wie z.B. auf Kleiderbügeln aufgehängten Textilwaren.

Die DE 203 11 926 U1 offenbart eine Hängeförderanlage nach dem Oberbegriff des Anspruchs 1.

Durch die Erfindung wird eine Hängeförderanlage geschaffen, mittels welcher Waren in eine Förderrichtung gefördert werden, indem die Waren von Mitnehmern in die Förderrichtung mitgenommen werden, wobei es die Anlage erlaubt, die Mitnehmer von den Waren zuverlässig und in einfacher Weise außer Eingriff zu bringen, sodass Blockierungen vermieden sind und dass Waren via Schwerkraftantrieb seitlich in den Förderstrang zuführbar sind.

Die Erfindung stellt eine Hängeförderanlage gemäß dem Anspruch 1 und eine Sortieranlage gemäß dem Anspruch 11 bereit. Weiterbildungen der Erfindung sind in den abhängigen Ansprüchen beschrieben.

Die Mitnehmer sind in der Regel im Vertikalabstand unter dem Umlaufantriebsstrang angeordnet, und die Führungsbahn ist im Vertikalabstand unter den Mitnehmern angeordnet, sodass die Mitnehmer dort aufgehängte Waren ergreifen und entlang der Führungsbahn geführt mitziehen oder schieben können.

Die seitlich der Mitnehmer bzw. damit seitlich der Führungsbahn und seitlich des Umlaufantriebsstrangs angeordnete und sich dort über die Kulissenstrecke hinweg entlang erstreckende Kulisse stellt ein einfach zu realisierendes Mittel zum Ausheben der Mitnehmer dar. Die Kulisse kann z.B. einfach als langgestreckte schmale Platte (=Bandform) ausgebildet sein, die in der Draufsicht geradlinig ausgebildet ist und die in der Seitenansicht eine gewünschte Kulissenstreckenform beschreibt. Es ist auch denkbar die Kulisse in der Draufsicht gekrümmt entsprechend einem Kurvenverlauf des Förderstrangs vorzusehen. Die Bewegung der Kulisse kann z.B. elektromotorgetrieben oder hydraulisch erfolgen. Der Hub der Kulisse ist so bemessen, dass die Mitnehmer den gewünschten bzw. erforderlichen Abstand von der Führungsbahn entfernt werden, sodass Waren von oben her via Schwerkraft der Führungsbahn zugeführt werden können. Hierbei ist zu beachten, dass oftmals hakenförmige Waren, wie z.B. Kleiderbügelhaken auf eine stangenförmige Führungsbahn geführt werden, wobei beim Überführen der hakenförmigen Ware von oben her auf die Führungsbahn eine Überhöhung des Warenhakens über der Führungsbahn vorliegt und damit berücksichtigt werden muss, bevor der Warenhaken dann mit seiner Konkavität auf der Führungsbahn stabil aufliegt; mit der Hängeförderanlage gemäß der Erfindung ist dies problemlos via Schwerkraftantrieb möglich.

Die Führung der Mitnehmer quer zur Führungsbahn bzw. quer zum Umlaufantriebsstrang kann z.B. durch eine Führungsvorrichtung in Form einer Schwenkführung mit einem oder mehreren Schwenkhebeln, z.B. einem Parallelschwenkhebelmechanismus, erfolgen. Die Schwenkhebel sind z.B. jeweils am Umlaufantriebsstrang und am Mitnehmer schwenkend angebracht, und zwar schwenkbar in einer Ebene parallel zur Führungsbahn und damit parallel zum Umlaufantriebsstrang. Wie unten noch erläutert kann auch eine Führungsvorrichtung in Form einer Linearführung vorgesehen sein.

Um einen ruckfreieren Betrieb zu erreichen, ist die Kulisse z.B. an ihrem in Förderrichtung gesehen hinteren Ende (=dem der Förderrichtung entgegen gewandten Ende) mit einer entgegen der Förderrichtung abfallenden Rampe ausgebildet. Beim Anheben der Kulisse in deren Aushebstellung gelangen die Mitnehmer in Kontakt mit der Kulisse und werden von der Kulisse zunächst entlang der Rampe nach oben weg von der Führungsbahn bis zum Erreichen des gewünschten bzw. erforderlichen Vertikalabstands zur Führungsbahn bewegt, wobei die Mitnehmer z.B. entlang der Kulisse gleiten. Der gewünschte Vertikalabstand wird durch den Vertikalhub der Kulisse eingestellt. Die Kulisse ist im Anschluss an die genannte Rampe z.B. geradlinig parallel zur Führungsbahn bzw. zum Umlaufantriebsstrang ausgebildet, so dass die Mitnehmer vom Umlaufantriebsstrang parallel dazu bzw. parallel zur Führungsbahn im genannten Vertikalabstand zur Führungsbahn bewegt werden. Die Kulisse kann ferner an ihrem in Förderrichtung gesehen vorderen Ende (=dem in Förderrichtung weisenden Ende) eine in Förderrichtung abfallend geneigte Rampe aufweisen, entlang welcher sich die Mitnehmer dann wieder zurück zur Führungsbahn bewegen können, z.B. gleitend, um dort wieder Waren entlang der Führungsbahn mitnehmen zu können.

Die Mitnehmer haben z.B. an ihrem in Förderrichtung nachlaufenden Ende einen Mitnehmerhaken, von welchem auf der Führungsbahn hängende Waren, z.B. Kleiderbügel mit daran hängenden Textilien, ergriffen und entlang der Führungsbahn mitgezogen werden. Das in Förderrichtung vorlaufende Ende der Mitnehmer ist z.B. mit einer Rampe versehen, welche in Förderrichtung ansteigend geneigt ist; damit kann der Mitnehmer sanft auf in Förderrichtung davor liegende Waren auflaufen, wobei der Mitnehmer von einer Eingriffs-Stellung aus, in welcher er Waren auf der Führungsbahn ergreifen kann, geführt nach oben in eine Außer-Eingriff-Stellung gebracht und entsprechend von der Führungsbahn wegbewegt wird, um dann die Ware oder eine Ansammlung von Waren zu überleiten. Hiernach bewegt sich der Mitnehmer wieder nach unten in zu der Führungsbahn (z.B. via Schwerkraft mit z.B. Federvorspannungsunterstützung); der Mechanismus kann hierbei so gestalten sein, dass der Mitnehmer dann die jeweilig letzte Ware, die er übergleitet hat, wieder mitnimmt. Die Querführung des Mitnehmers quer zur Führungsbahn erfolgt beim vorstehend beschriebenen Übergleitvorgang wieder durch die Führungsvorrichtung, welche auch beim Ausheben der Mitnehmer durch die Kulisse führt. Die Führungsvorrichtung ist damit fester Bestandteil der Verbindung zwischen dem jeweiligen Mitnehmer und dem Umlaufantriebsstrang.

Eine Führungsvorrichtung bzw. ein Führungsmechanismus, die/der einen ausreichend großen Hub für den Mitnehmer quer zur Führungsbahn erlaubt und die/der zuverlässig ohne Blockierungsgefahr arbeitet, wird z.B. von einer quer zum Umlaufförderstrang sich erstreckenden Linearführung erzielt, entlang welcher der Mitnehmer geradlinig geführt, z.B. gleitgeführt ist. Die Linearführung kann von einem oder mehreren Stäben gebildet sein, welche in ein entsprechendes Loch bzw. in entsprechende Löcher in dem Mitnehmer eingreifen, sodass der Mitnehmer entlang der Stäbe gleitgeführt ist. Die Verwendung von mindestens zwei Stäben bietet den Aspekt, dass der Mitnehmer gleichzeitig auch um seine Vertikalachse (Achse quer zur Führungsbahn bzw. quer zum Umlaufantriebsstrang) drehfest geführt ist.

Ein Aspekt einer solchen Linearführung ist z.B. in den Ansprüchen 7 und 10 beschrieben, wonach die Kettenbolzen, z.B. jeweils zwei zueinander benachbarte Kettenbolzen pro Mitnehmer, einer Antriebskette gleichzeitig als Führungsstäbe zum Führen der Bewegung der Mitnehmer quer zur Führungsbahn herangezogen werden. Die lineare Stabführung erlaubt als solche einen äußerst großen Hub, ohne die Gefahr eines Verzwängens und dadurch Blockierens des Führungsmechanismus.

Die Mitnehmer können in Richtung in ihre Eingriffs-Stellung federvorgespannt sein, z.B. durch Druck-Schraubenfedern.

Der Eingriff mit der Kulisse erfolgt z.B. über eine am jeweiligen Mitnehmer ausgebildete und sich zur Seite (in Richtung zu der Seite, wo die Kulisse angeordnet ist) hin erstreckende Nase, wie z.B. einen einfachen Stift, der an den Mitnehmern angeformt oder daran angebracht sind und gegen welchen die Kulisse vertikal drücken kann, sodass die Mitnehmer mit ihrer jeweiligen Nase entlang der Kulisse gleiten können. Die Nase kann auch mit einer Rolle versehen sein, sodass ein Rollkontakt zwischen Nase und Kulisse vorliegt.

Eine Zuführung von Waren via Schwerkraft kann z.B. über einen im Bereich der Kulisse (z.B. auf der selben oder der gegenüberliegenden Seite) angeordneten Weichenarm erfolgen, der schräg nach unten in Richtung zu der Führungsbahn geneigt ist und der z.B. schwenkbar gelagert ist, sodass er in die Führungsbahn hinein und von der Führungsbahn wegschwenkbar ist. Der Weichenarm kann z.B. in Richtung zu der Führungsbahn hin federvorgespannt sein, wobei er in der Normalstellung der Kulisse von z.B. den Mitnehmern entgegen der Federkraft stets weg von der Führungsbahn gedrückt wird; der Weichenarm kann auch gesteuert motorgetrieben bewegbar vorgesehen sein.

Falls Waren der Führungsbahn zugeführt werden sollen, wird die Kulisse in ihre Aushebstellung oder Ausfahrstellung angehoben, wodurch die Mitnehmer von der Führungsbahn weggehoben werden. Der Weichenarm wird seitlich in die Führungsbahn hineinbewegt und Waren werden dem Weichenarm zugeführt, entlang welchem die Waren dann schräg nach unten von der Seite her auf die Führungsbahn rutschen können. Danach wird die Kulisse wieder nach unten in ihre Normalbetriebstellung gebracht und wird der Weichenarm aus der Führungsbahn seitlich herausbewegt. Die Mitnehmer nehmen dann die neu in die Führungsbahn einbrachten Waren nach und nach mit.

Nach einem weiteren Aspekt der Erfindung hat die Hängeförderanlage ferner wenigstens eine Sicherheits-Führungseinrichtung, z.B. in Form einer Führungsleiste, die seitlich von den Mitnehmern angeordnet ist und welche derart mit den Mitnehmern in Eingriff kommt, dass die Mitnehmer gegen die Führungsbahn gedrückt gehalten werden, sodass sie nicht außer Eingriff von mitgenommenen Waren gelangen können.

Die Sicherheits-Führungseinrichtung führt die Mitnehmer im Prinzip wie die Kulisse; sie braucht jedoch nicht in dem Maße querbeweglich installiert zu sein, sondern kann z.B. nur insoweit beweglich sein, dass sie eine Querbewegung der Mitnehmer für den Fall erlaubt, in welchem die Mitnehmer Waren überlaufen müssen, d.h. zum Beispiel übergleiten müssen. Hierzu kann die Sicherheits-Führungseinrichtung z.B. federelastisch in Richtung zur der Führungsbahn vorgespannt gelagert sein, wobei die Federkraft so eingestellt ist, dass die Mitnehmer bei aufgrund einer Unebenheit auftretenden Ruck-Querkräften auf der Führungsbahn gehalten werden, dass aber ein Überlaufen von Waren ermöglicht ist.

Ein Halten von Mitnehmern auf der Führungsbahn ist z.B. im Bereich von Steigungen und Gefällen in der Führungsbahn sinnvoll; hier kann die Sicherheits-Führungseinrichtung z.B. auch komplett stationär, d.h. in Querrichtung komplett unnachgiebig installiert sein, weil hier eine Anhäufung von Waren, was ein Überlaufen derselben durch den Mitnehmer erfordern würde, nicht gegeben ist. Die Sicherheits-Führungseinrichtung wird daher z.B. im Bereich derartiger Steigungen und/oder Gefällen in der Führungsbahn angeordnet.

Die Mitnehmer kommen in Berührungskontakt mit der Sicherheits-Führungseinrichtung, d.h. sie werden von oben her kontaktiert und in ihrem Minimalabstand (Querabstand) zur Führungsbahn gehalten, sodass sie nicht außer Eingriff mit den mitgeführten Waren gelangen.

Die Sicherheits-Führungseinrichtung ist hierbei z.B. derart ausgebildet, dass sie an den Nasen der Mitnehmer angreift; in diesem Falle von oben her.

Die erfindungsgemäße Hängeförderanlage eignet sich z.B. zur Verwendung in Sortieranlagen und Weiterverteilanlagen in der Warenlogistik.

Die Erfindung wird im Folgenden anhand eines bevorzugten Ausführungsbeispiels mit Bezugnahme auf die Zeichnung erläutert. In der Zeichnung zeigen:
Figur 1A eine abgeschnittene Seitenansicht einer Hängeförderanlage gemäß der Erfindung im Bereich einer Warenzuführstelle mit einer Kulisse im Normalbetriebszustand,
Figur 1B eine abgeschnittene Draufsicht der Hängeförderanlage von Figur 1,
Figur 2A eine abgeschnittene Seitenansicht der erfindungsgemäßen Hängeförderanlage in einem Bereich außerhalb einer Warenzuführstelle,
Figur 2B eine Querschnittsansicht von Figur 2A,
Figur 3A eine abgeschnittene Seitenansicht einer Hängeförderanlage gemäß der Erfindung im Bereich einer Warenzuführstelle mit einer Kulisse im Aushebbetriebszustand und
Figur 3B eine abgeschnittene Draufsicht der Hängeförderanlage von Figur 3A.

Gemäß den Figuren weist eine Hängeförderanlage 1 gemäß einem Ausführungsbeispiel der Erfindung einen Umlaufantriebsstrang 3 in Form einer Antriebskette 5 mit über Kettenbolzen 7 miteinander verbundenen Kettenglieder 9 auf; die Antriebskette 5 ist in eine Förderrichtung F angetrieben, z.B. über ein oder mehrere Elektromotor angetriebene Zahnräder (nicht dargestellt).

Die Hängeförderanlage 1 hat ferner eine Mehrzahl von Mitnehmern 11, die entlang der Antriebskette 5 an dieser in regelmäßigen Abständen angebracht sind, und hat eine Führungsbahn 13, die aus Profilschienen zusammengesetzt ist und auf der Waren 15 in Form von Kleiderbügeln mit daran hängenden Textilien (nicht dargestellt) mit ihren Bügelhaken hängen.

Die Antriebskette 5 verläuft parallel zu der Führungsbahn 13 in einem Vertikalabstand V darüber; vertikal dazwischen sind die Mitnehmer 11 angeordnet. Jeweils auf Höhe (Position entlang Antriebsstrang 3) der Mitnehmer 11 sind bei der Antriebskette 5 zwei zueinander benachbarte Kettenbolzen 7 in Richtung zu der Führungsbahn 13 hin verlängert, welche in entsprechend dimensionierte Löcher in den Mitnehmern 11 passend eingreifen, sodass die Mitnehmer 11 von den Kettenbolzen 7 quer zur Führungskette 3 und quer zur Führungsbahn 13 geführt bewegbar an der Antriebskette 5 gehalten sind. Die jeweiligen zwei Kettenbolzen 7 bilden damit zwei Führungsstäbe 17 einer Linearführung 19 für die Mitnehmer 11, so dass eine entsprechende Führungsvorrichtung ausgebildet ist.

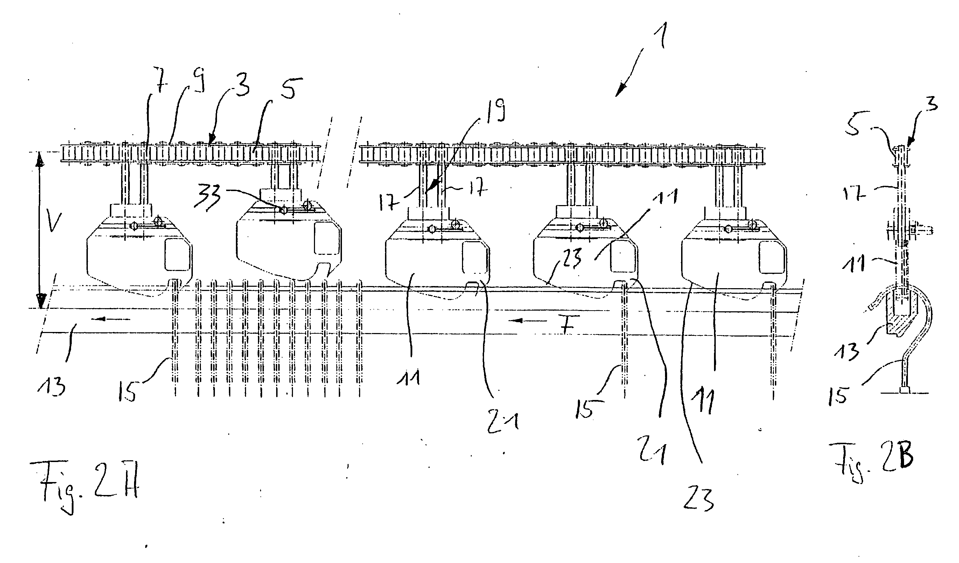

Wie zum Beispiel aus Figur 2A ersichtlich ist, werden die Mitnehmer 11 mit der Bewegung der Antriebskette 5 in Förderrichtung F mitbewegt und können auf der Führungsbahn 13 hängende Waren mitnehmen. Hierzu weisen die Mitnehmer 11, d.h. deren Mitnehmerkörper, einen in Förderrichtung F nachlaufenden Hakenabschnitt 21 auf, von welchem die jeweilige Ware 15 ergriffen werden kann. Der jeweilige Mitnehmer 11 hat ferner einen in Förderrichtung F vorlaufenden Rampenabschnitt 23, der in Förderrichtung F ansteigend geneigt ist und mittels dessen der Mitnehmer 11 schonend auf in Förderrichtung davor auf der Führungsbahn hängende Waren 11 auflaufen kann und diese Waren, wie aus Figur 2A ersichtlich, übergleiten kann, ohne mit den Waren im Eingriff zu sein, wobei der Mitnehmer 11 hierbei entlang der Führungsstäbe 17 geführt in eine Außer-Eingriff-Stellung bewegt ist. Beim Erreichen der letzten Ware 15 einer zuvor überglittenen Ansammlung von Waren 15 bewegt sich der Mitnehmer 11 wieder entlang der Führungsstäbe 17 quer zur Führungsbahn 13 in eine Eingriff-Stellung, wobei er die genannte letzte Ware 15 mit seinem Hakenabschnitt 21 in Förderrichtung F mitnimmt.

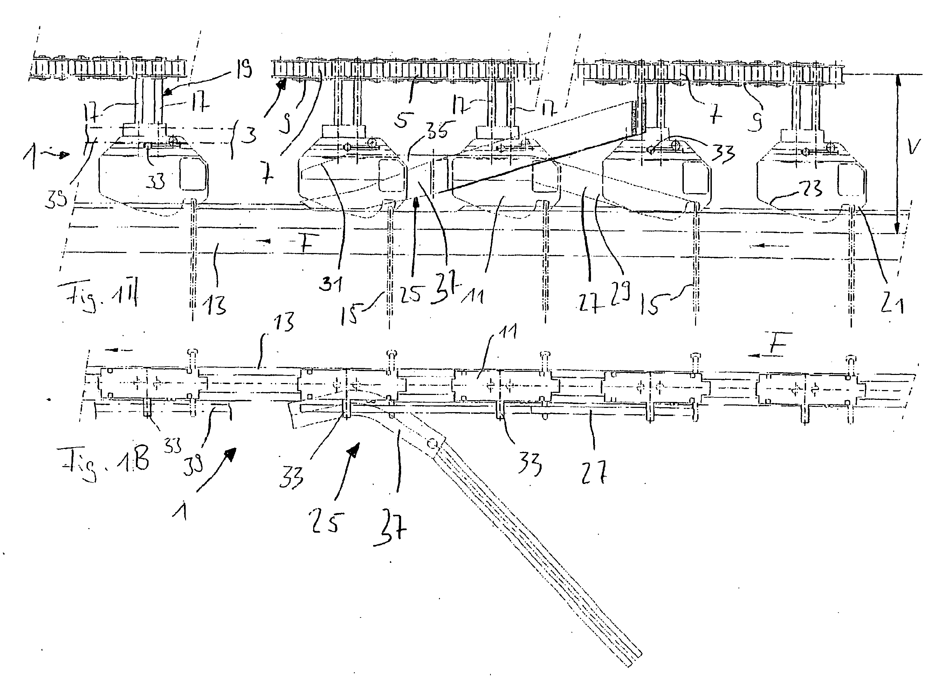

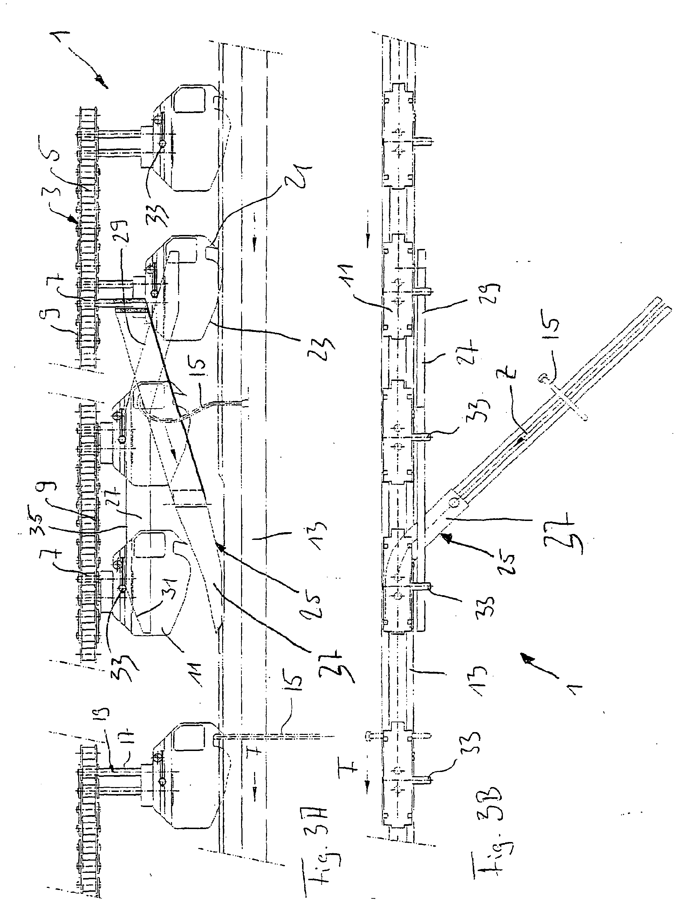

Um Waren auf die Führungsbahn 13 zuführen zu können, hat die Förderanlage 1 an einer oder an mehreren Stellen jeweils eine Weichenvorrichtung 25 (siehe Figuren 1A, 1B, 3A und 3B) mit einer quer zur Führungsbahn 13, hier vertikal und parallel zu den Führungsstäben 17, linear bewegbaren Kulisse 27 in Form einer schmalen, langgestreckten Platte. Die Kulisse 27 ist nahe seitlich an der Führungsbahn 13 und an den Mitnehmern 11 angeordnet und hat einen der Förderrichtung F entgegen gewandten Rampen-Endabschnitt 29 mit einer gegen die Förderrichtung abfallenden Neigung und einen in Förderrichtung F weisenden Rampen-Endabschnitt 31 mit einer in Förderrichtung abfallen Neigung.

Die Mitnehmer 11 sind auf ihrer der Kulissen=Seite zugewandten Seite mit einer jeweiligen Nase 33 in Form eines Stifts versehen, welche Nase 33 quer zur Führungsbahn 3 seitlich über die Führungsbahn 3 vorsteht, sodass sie im Bewegungsweg, hier Vertikalbewegungsweg, der Kulisse 27 liegt und von dieser beim Anheben kontaktiert werden kann.

Wird nunmehr wie in Figur 3A gezeigt die Kulisse 27 in eine obere Endstellung (=Aushebbetriebstellung) vertikal nach oben bewegt, dann kommen die Nasen 33 der Mitnehmer 11 in Berührungskontakt mit der Kulisse 27 und gleiten entlang der Kulisse 27, wodurch sie vertikal nach oben in eine Außer-Eingriffstellung gebracht werden, wobei der Hub der Kulissenbewegung so groß ist, dass die Waren 15 wie in den Figuren 1A, 1B, 3A, 3B ersichtlich von der Seite und oben her auf die Führungsbahn 13 geführt werden können.

Die Kulisse 27 hat zwischen den beiden Rampen-Endabschnitten 29 und 31 einen geradlinigen Abschnitt 35, der parallel zu der Führungsbahn 13 verläuft, sodass die Mitnehmer 11 in einem Querabstand, hier Vertikalabstand, zu der Führungsbahn eine Weile parallel entlang der Führungsbahn 13 bewegt werden. Die Kulissenstrecke setzt sich aus dem Weg entlang der Rampenabschnitte 29, 31 und dem geradlinigen Abschnitt 35 zusammen.

Die Führungsstäbe 17 erlauben die von der Hubbewegung bewirkte entsprechende Hubbewegung der Mitnehmer 11 in geführte Weise, wobei sehr große Hubbewegungen problemlos realisierbar sind. Die Kulisse 27 muss nicht notwendigerweise linear bewegbar ausgebildet sein; sie könnte auch in den Bewegungsweg der Mitnehmer 11 vertikal von unten eingeschwenkt werden.

Die Weichenvorrichtung 25 hat ferner einen um eine Vertikalachse schwenkend gelagerten Weichenarm 37, der benachbart zur Kulisse 27 auf deren Seite der Führungsbahn 13 angeordnet ist. Der Weichenarm 37 verläuft schräg von oben und' von der Seite her in Förderrichtung F an die Führungsbahn 13 heran, sodass Waren 15 entlang einer Zuführrichtung Z (siehe Figur 3B) schräg von oben her via Schwerkraftantrieb in Richtung zur Führungsbahn 13 förderbar sind. In der Normalbetriebstellung der Kulisse 27, d.h. die Kulisse 27 ist in ihrer unteren Vertikalposition, ist der Weichenarm 37 aus der Führungsbahn 13 herausgeschwenkt (siehe Figur 1B); dies kann durch einen Motorantrieb gesteuert erfolgen, oder der Weichenarm 37 ist zur Führungsbahn 13 hin federvorgespannt und wird von den Mitnehmern 11 oder einem Kulissenteil von der Führungsbahn weg gehalten. Falls sich die Kulisse 27 in ihrer Aushebbetriebstellung befindet ,d.h. die Kulisse 27 ist in ihrer oberen Vertikalposition, dann ist der Weichenarm 37 in die Führungsbahn 13 geschwenkt, sodass die Waren 15 entlang dem Weichenarm 37 auf die Führungsbahn 13 rutschen können.

Nach erfolgter Zuführung der Waren 15 wird die Kulisse 27 wieder in ihre Normalbetriebstellung zurückbewegt, sodass die via dem Weichenarm 37 neu auf die Führungsbahn 13 zugeführten Waren 15 nach und nach (z.B. immer die letzte Ware 15 nach dem Übergleitvorgang) von den Mitnehmern 11 ergriffen und gefördert werden.

In Figuren 1A und 1B ist ferner in Strich-Punkt-Linie eine Sicherheits-Führungseinrichtung 39 dargestellt, welche in Form einer Führungsleiste ausgebildet ist, die sich über eine vorbestimmte Führungsstrecke hinweg entlang der Führungsbahn 3 und damit entlang der Mitnehmer 11 seitlich davon sowie parallel dazu erstreckt. Der Querabstand der Sicherheits-Führungseinrichtung 39 zur Führungsbahn 3 ist so bemessen, dass die mit der Sicherheits-Führungseinrichtung 39 in Kontakt stehenden Mitnehmer 11 in ihrem minimalen Querabstand zur Führungsbahn 3 gehalten werden, sodass sie nicht quer zur Führungsbahn, hier vertikal nach oben, ausweichen können; die Mitnehmer 11 werden damit konsequent im Eingriff mit gegebenenfalls mitgeführt Waren 15 gehalten.

Bei der gezeigten Ausführungsform greift die Sicherheits-Führungseinrichtung 39 von oben her an den Nasen 33 der Mitnehmer 11 an. Eine jeweilige Sicherheits-Führungseinrichtung ist z.B. im Bereich von Gefällen, Steigungen und/oder sich gegebenenfalls als etwas ruppig herausstellende Abschnitte der Führungsbahn angeordnet.

Gemäß einer weiteren Ausführungsform der Erfindung ist die Hängeförderanlage 1 ausgestattet mit einer umlaufenden Antriebskette 5, welche über Kettenbolzen 7 miteinander verbundene Kettenglieder 9 aufweist, und mit entlang der Antriebskette 3 an dieser angebrachten Mitnehmern 11, von welchen beim Bewegen der Antriebskette 5 auf einer zu der Antriebskette 3 benachbart und parallel verlaufenden Führungsbahn 13 hängende Waren 13 in eine Förderrichtung F mitgenommen werden können, wobei die Mitnehmer 11 über jeweilige verlängerte Kettenbolzen 7,17 an der Antriebskette 5 angebracht sind, entlang welcher Kettenbolzen 7,17 die Mitnehmer 11 quer zu der Antriebskette 5 und damit quer zu der Führungsbahn 13 geführt bewegbar sind. Bevorzugt sind bei der weiteren Ausführungsform die Mitnehmer 11 über wenigstens zwei Kettenbolzen 7,17, z.B. über wenigstens zwei zueinander benachbarte Kettenbolzen 7,17, an der Antriebskette 5 angebracht. Ferner bevorzugt sind bei der weiteren Ausführungsform die Mitnehmer 11 in Richtung zu der Führungsbahn 13 hin federvorgespannt.

Gemäß einer noch weiteren Ausführungsform der Erfindung ist die Hängeförderanlage 1 ausgestattet mit einem Umlaufantriebsstrang 3, der in eine Förderrichtung F bewegbar angetrieben ist, mit entlang dem Umlaufantriebsstrang 3 an diesem angebrachten Mitnehmern 11, von welchen beim Bewegen des Umlaufantriebsstrangs 3 auf einer zu dem Umlaufantriebsstrang 3 benachbart und parallel verlaufenden Führungsbahn 13 hängende Waren 15 in die Förderrichtung F mitgenommen werden können, wobei die Mitnehmer 11 quer zu dem Umlaufantriebsstrang 3 und damit quer zu der Führungsbahn 13 geführt bewegbar sind, und mit wenigstens einer seitlich von den Mitnehmern 11 angeordneten, vertikal bewegbaren Kulisse 27, welche eine obere Stirnfläche hat und welche quer zu dem Umlaufantriebsstrang 3 und damit quer zu der Führungsbahn 13 zwischen einer Normalbetriebstellung und einer Aushebbetriebstellung bewegbar ist, in welcher die Mitnehmer 11 von der Kulisse 27 über eine Kulissenstrecke hinweg außer Eingriff von den Waren 15 und in einen Vertikal-Abstand zu der Führungsbahn 13 gebracht sind, sodass an dieser Stelle der Führungsbahn 13 Waren 15 seitlich von oberhalb der Führungsbahn 13 her auf die Führungsbahn 13 zuführbar sind, wobei die Mitnehmer 11 mit einer seitlich vorstehenden Nase 33, z.B. in Form eines Stifts, ausgebildet sind, an welcher die Kulisse 27 mit ihrer oberen Stirnfläche angreifen kann, um die Mitnehmer 11 außer Eingriff von den Waren 15 nach oben hin auszuheben und in den Vertikal-Abstand zu der Führungsbahn 13 zu bringen. Bevorzugt weist bei der noch weiteren Ausführungsform die Kulisse 27 an ihrem der Förderrichtung F entgegen gewandten Ende eine entgegen der Förderrichtung F abfallend geneigte Rampe 29 auf, entlang welcher die Mitnehmer 11 geführt in den Vertikal-Abstand von der Führungsbahn 13 wegbewegbar sind. Ferner bevorzugt weist die noch weitere Ausführungsform einen im Bereich der Kulisse 27 schräg von oben her an die Führungsbahn 13 heranragenden, bewegbaren Weichenarm 37 auf, welcher in der Aushebstellung der Kulisse 27 in die Führungsbahn 13 eingreift, sodass Waren 11 auf dem Weichenarm 3 via Schwerkraftantrieb auf die Führungsbahn 13 zuführbar sind, und welcher in der Normalbetriebstellung der Kulisse 27 von der Führungsbahn 13 wegbewegt ist. Ferner bevorzugt weist die erfindungsgemäße Linearführung 19 vorteilhaft einen oder wenigstens zwei Stäbe 17 auf, der oder die sich von dem Umlaufantriebsstrang 3 aus erstreckt/erstrecken und in den Mitnehmer 11 eingreift/eingreifen, sodass der Mitnehmer 11 entlang des Stabs oder entlang der Stäbe 17 gleitend geführt ist. Ferner bevorzugt ist bei der noch weiteren Ausführungsform der Umlaufantriebsstrang 3 von einer umlaufenden Antriebskette 5 gebildet, welche über Kettenbolzen 7 miteinander verbundene Kettenglieder 9 aufweist, wobei die Mitnehmer 11 über jeweilige verlängerte Kettenbolzen 7,17 an der Antriebskette 5 angebracht sind, entlang welcher Kettenbolzen 7,17 die Mitnehmer 11 quer zu der Antriebskette 5 und damit quer zu der Führungsbahn 13 geführt bewegbar sind. Ferner bevorzugt weist die noch weitere Ausführungsform wenigstens eine Sicherheits-Führungseinrichtung 39 auf, z.B. in Form einer Führungsleiste, die seitlich von den Mitnehmern 11 angeordnet ist und welche derart mit den Mitnehmern 11 in Eingriff kommt, dass die Mitnehmer 11 gegen die Führungsbahn 13 gedrückt gehalten werden, sodass sie nicht außer Eingriff von mitgenommenen Waren 15 gelangen können, wobei ferner bevorzugt die Sicherheits-Führungseinrichtung 39 an den Nasen 33 der Mitnehmer 11 angreift.

## Patentansprüche

1. Hängeförderanlage (1)
- mit einem Umlaufantriebsstrang (3), der in eine Förderrichtung (F) bewegbar angetrieben ist,
- mit entlang dem Umlaufantriebsstrang (3) an diesem angebrachten Mitnehmern (11), von welchen beim Bewegen des Umlaufantriebsstrangs (3) auf einer zu dem Umlaufantriebsstrang (3) benachbart und parallel verlaufenden Führungsbahn (13) hängende Waren (15) in die Förderrichtung (F) mitgenommen werden können, wobei die Mitnehmer (11) quer zu dem Umlaufantriebsstrang (3) und damit quer zu der Führungsbahn (13) geführt bewegbar sind, und
- mit wenigstens einer seitlich von den Mitnehmern (11) angeordneten Kulisse (27), welche quer zu dem Umlaufantriebsstrang (3) und damit quer zu der Führungsbahn (13) zwischen einer Normalbetriebstellung und einer Aushebbetriebstellung bewegbar ist, in welcher die Mitnehmer (11) von der Kulisse (27) über eine Kulissenstrecke hinweg an einer Stelle der Führungsbahn (13) außer Eingriff von den Waren (15) und in einen Abstand zu der Führungsbahn (13) gebracht sind, **dadurch gekennzeichnet, dass** an dieser Stelle der Führungsbahn (13) Waren (15) seitlich von oberhalb der Führungsbahn (13) her auf die Führungsbahn (13) zuführbar sind, wobei der jeweilige Mitnehmer (11) über eine sich vom Umlaufantriebsstrang (3) erstreckende Linearführung (19) geführt bewegbar ist.

2. Hängeförderanlage (1) nach Anspruch 1, wobei die Mitnehmer (11) mit einer seitlich vorstehenden Nase (33), z.B. in Form eines Stifts, ausgebildet sind, an welcher die Kulisse (27) angreifen kann, um die Mitnehmer (11) außer Eingriff von den Waren (15) und in den Abstand zu der Führungsbahn (13) zu bringen.

3. Hängeförderanlage (1) nach Anspruch 1 oder 2, wobei die Kulisse (27) an ihrem der Förderrichtung (F) entgegen gewandten Ende eine entgegen der Förderrichtung (F) abfallend geneigte Rampe (29) aufweist, entlang welcher die Mitnehmer (11) geführt in den Abstand von der Führungsbahn (13) wegbewegbar sind.

4. Hängeförderanlage (1) nach einem der vorhergehenden Ansprüchen, mit einem im Bereich der Kulisse (27) schräg von oben her an die Führungsbahn (13) heranragenden, bewegbaren Weichenarm (37), welcher in der Aushebstellung der Kulisse (27) in die Führungsbahn (13) eingreift, sodass Waren (15) auf dem Weichenarm (37) via Schwerkraftantrieb auf die Führungsbahn (13) zuführbar sind, und welcher in der Normalbetriebstellung der Kulisse (27) von der Führungsbahn (13) wegbewegt ist.

5. Hängeförderanlage (1) nach Anspruch 1, wobei die Linearführung (19) einen oder wenigstens zwei Stäbe (17) aufweist, der oder die sich von dem Umlaufantriebsstrang (3) aus erstreckt/erstrecken und in den Mitnehmer (11) eingreift/eingreifen, sodass der Mitnehmer (11) entlang des Stabs oder entlang der Stäbe (17) gleitend geführt ist.

6. Hängeförderanlage (1) nach einem der vorhergehenden Ansprüche, wobei der Umlaufantriebsstrang (3) von einer umlaufenden Antriebskette (5) gebildet wird, welche über Kettenbolzen (7) miteinander verbundene Kettenglieder (9) aufweist, wobei die Mitnehmer (11) über jeweilige verlängerte Kettenbolzen (7,17) an der Antriebskette (5) angebracht sind, entlang welcher Kettenbolzen (7,17) die Mitnehmer (11) quer zu der Antriebskette (5) und damit quer zu der Führungsbahn (13) geführt bewegbar sind.

7. Hängeförderanlage (1) nach einem der vorhergehenden Ansprüche, ferner mit wenigstens einer Sicherheits-Führungseinrichtung (39), z.B. in Form einer Führungsleiste, die seitlich von den Mitnehmern (11) angeordnet ist und welche derart mit den Mitnehmern (11) in Eingriff kommt, dass die Mitnehmer (11) gegen die Führungsbahn (13) gedrückt gehalten werden, sodass sie nicht außer Eingriff von mitgenommenen Waren (15) gelangen können.

8. Hängeforderanlage (1) nach Anspruch 7 und Anspruch 2, wobei die Sicherheits-Führungseinrichtung (39) an den Nasen (33) der Mitnehmer (11) angreift.

9. Hängeförderanlage (1) nach Anspruch 7, wobei die die Mitnehmer (11) über wenigstens zwei Kettenbolzen (7,17), z.B. über wenigstens zwei zueinander benachbarte Kettenbolzen (7,17), an der Antriebskette (5) angebracht sind.

10. Hängeförderanlage (1) nach einem der vorhergehenden Ansprüche, wobei die Mitnehmer (11) in Richtung zu der Führungsbahn (13) hin federvorgespannt sind.

11. Sortieranlage mit einer Hängeförderanlage (1) nach einem der vorhergehenden Ansprüche.

## Claims

1. Suspended conveyor system (1),
- having a revolving drive train (3) driven to be movable in a conveying direction (F),
- having drivers (11) attached to the revolving drive train (3) along the same, by which, when moving the revolving drive train (3), goods (15) hanging on a guide track (13) extending adjacent to and in parallel with the revolving drive train (3) can be driven along in the conveying direction (F), wherein the drivers (11) are movable in a guided manner transverse to the revolving drive train (3) and therefore transverse to the guide track (13), and
- having at least one connecting link (27) arranged laterally with respect to the drivers (11), which is movable transverse to the revolving drive train (3) and hence transverse to the guide track (13) between a normal operating position and a lifting-out operating position in which the drivers (11) are disengaged from the goods (15) and brought to a distance with respect to the guide track (13) by the connecting link (27) across a connecting link path at a point of the guide track (13),
**characterized in that** goods (15) can be supplied at this point of the guide track (13) laterally from above the guide track (13) onto the guide track (13), wherein the respective driver (11) is movable in a guided manner by a linear guide (19) extending from the revolving drive train (3).

2. Suspended conveyor system (1) according to claim 1, wherein the drivers (11) are formed with a laterally projecting nose (33), for example in the form of a pin, at which the connecting link (27) can engage, in order to disengage the drivers (11) from the goods (15) and bring them to the distance with respect to the guide track (13).

3. Suspended conveyor system (1) according to claim 1 or 2, wherein the connecting link (27) comprises at its end opposed to the conveying direction (F) a ramp (29) inclined downwards in an opposite direction to the conveying direction (F), along which the drivers (11) can be moved away in a guided manner to the distance with respect to the guide track (13).

4. Suspended conveyor system (1) according to any one of the preceding claims, having a movable switch arm (37) projecting diagonally from the top towards the guide track (13) in the region of the connecting link (27), which engages with the guide track (13) in the lifting-off position of the connecting link (27), so that goods (15) can be supplied onto the guide track (13) by gravity drive on the switch arm (37), and which is moved away from the guide track (13) in the normal operating position of the connecting link (27).

5. Suspended conveyor system (1) according to claim 1, wherein the linear guide (19) comprises one or at least two bars (17) extending from the revolving drive train (3) and engaging with the driver (11), so that the driver (11) is guided slidingly along the bar or along the bars (17).

6. Suspended conveyor system (1) according to any of the preceding claims, wherein the revolving drive train (3) is formed by a revolving drive chain (5) comprising chain links (9) connected to each other by chain pins (7), wherein the drivers (11) are attached to the drive chain (5) by corresponding elongated chain pins (7, 17), along which chain pins (7, 17) the drivers (11) are movable in a guided manner transverse to the drive chain (5) and therefore transverse to the guide track (13).

7. Suspended conveyor system (1) according to any of the preceding claims, further having at least one security guiding device (39), for example in the form of a guiding gib, arranged laterally with respect to the drivers (11) and engaging with the drivers (11) in such a manner that the drivers (11) are held to be pressed against the guide track (13), so that they cannot disengage from goods (15) carried along.

8. Suspended conveyor system (1) according to claim 7 and claim 2, wherein the security guiding device (39) engages with the noses (33) of the drivers (11).

9. Suspended conveyor system (1) according to claim 7, wherein the drivers (11) are attached to the drive chain (5) by at least two chain pins (7, 17), for example by at least two chain pins (7, 17) adjacent to each other.

10. Suspended conveyor system (1) according to any of the preceding claims, wherein the drivers (11) are spring-preloaded in the direction toward the guide track (13).

11. Sorting plant having a suspended conveyor system (1) according to any one of the preceding claims.

## Revendications

1. Installation de transport suspendu (1),
- ayant une ligne d'entraînement circulante (3), entraînée à un mouvement en direction de transport (F),
- ayant des entraîneurs (11) fixés à la ligne d'entraînement circulante (3) le long de celle-ci, par lesquels, lors du mouvement de la ligne d'entraînement circulante (3), des articles (15) suspendus sur une glissière de guidage (13) passant adjacent et parallèlement à la ligne d'entraînement circulante (3) peuvent être amenés en direction de transport (F), les entraîneurs (11) étant mobiles de façon guidée transversalement à la ligne d'entraînement circulante (3) et ainsi transversalement à la glissière de guidage (13), et
- ayant au moins une coulisse (27) située au côté des entraîneurs (11), qui est mobile transversalement à la ligne d'entraînement circulante (3) et ainsi transversalement à la glissière de guidage (13) entre une position de fonctionnement normal et une position de fonctionnement de détachement, dans laquelle les entraîneurs (11) sont désengrenés des articles (15) et mis à une distance par rapport à la glissière de guidage (13) par la coulisse (27) à travers un trajet de coulisse à une position de la glissière de guidage (13), **caractérisée en ce que**, à cette position de la glissière de guidage (13), les articles (15) peuvent être amenés latéralement d'au-dessus de la glissière de guidage (13) vers la glissière de guidage (13), l'entraîneur (11) respectif étant mobile de façon guidée par un guidage linéaire (19) s'étendant de la ligne d'entraînement circulante (3).

2. Installation de transport suspendu (1) selon la revendication 1, dans laquelle les entraîneurs (11) sont formés avec un toc (33) faisant saillie latéralement, par exemple sous forme d'une goupille, dans lequel la coulisse (27) peut s'engrener pour désengrener les entraîneurs (11) des articles (15) et pour mettre ceux-ci à ladite distance par rapport à la glissière de guidage (13).

3. Installation de transport suspendu (1) selon les revendications 1 ou 2, dans laquelle la coulisse (27) comporte à son extrémité opposée à la direction de transport (F) une rampe (29) inclinée vers le bas dans une direction opposée à la direction de transport (F), le long de laquelle les entraîneurs (11) peuvent être éloignés de façon guidée vers ladite distance par rapport à la glissière de guidage (13).

4. Installation de transport suspendu (1) selon l'une quelconque des revendications précédentes, ayant une branche d'aiguillage (37) mobile faisant saillie diagonalement du haut vers la glissière de guidage (13) dans la région de la coulisse (27), qui s'engrène dans la glissière de guidage (13) dans la position de détachement de la coulisse (27), de sorte que les articles (15) peuvent être amenés par entraînement de gravitation sur la glissière de guidage (13) sur la branche d'aiguillage (37), et qui est éloignée de la glissière de guidage (13) en position de fonctionnement normal de la coulisse (27).

5. Installation de transport suspendu (1) selon la revendication 1, dans laquelle le guidage linéaire (19) comprend une ou au moins deux barres (17) qui s'étend/s'étendent à partir de la ligne d'entraînement circulante (3) et s'engrène/ s'engrènent dans l'entraîneur (11), de sorte que l'entraîneur (11) est guidé en coulissant le long de ladite barre ou le long desdites barres (17).

6. Installation de transport suspendu (1) selon l'une quelconque des revendications précédentes, dans laquelle la ligne d'entraînement circulante (3) est formée par une chaîne d'entraînement (5) circulante, comportant des éléments de chaîne (9) liés les uns aux autres par des tourillons de chaîne (7), les entraîneurs (11) étant fixés à la chaîne d'entraînement (5) par des tourillons de chaîne (7, 17) prolongés respectifs, le long desquels tourillons de chaîne (7, 17) les entraîneurs (11) sont mobiles de façon guidée transversalement à la chaîne d'entraînement (5) et ainsi transversalement à la glissière de guidage (13).

7. Installation de transport suspendu (1) selon l'une quelconque des revendications précédentes, ayant en outre au moins un dispositif de guidage de sécurité (39), par exemple sous forme d'une baguette de guidage, situé au côté des entraîneurs (11), et qui s'engrène dans les entraîneurs (11) de façon à tenir les entraîneurs (11) pressés contre la glissière de guidage (13), de sorte que ceux-ci ne puissent pas se désengrener d'articles (15) amenés.

8. Installation de transport suspendu (1) selon la revendication 7 et selon la revendication 2, dans laquelle le dispositif de guidage de sécurité (39) s'engrène dans les tocs (33) des entraîneurs (11).

9. Installation de transport suspendu (1) selon la revendication 7, dans laquelle les entraîneurs (11) sont fixés à la chaîne d'entraînement (5) par au moins deux tourillons de chaîne (7, 17), par exemple par au moins deux tourillons de chaîne (7, 17) adjacents.

10. Installation de transport suspendu (1) selon l'une quelconque des revendications précédentes, dans laquelle les entraîneurs (11) sont précontraints par ressorts en direction de la glissière de guidage (13).

11. Installation de triage ayant une installation de transport suspendu (1) selon l'une quelconque des revendications précédentes.
